# DEMANDE DE BREVET EUROPEEN

(11) **EP 1 175 827 A1**
(43) Date de publication de la demande: **30.01.2002**
(21) Numéro de dépôt: 01401680.2
(22) Date de dépôt: 26.06.2001
(51) Int. Cl.: A01K 1/01

(54) **Engin automoteur notamment destiné à l'élimination des déchets par raclage.**

(30) Priorité: 25.07.2000 FR 0009884
(71) Demandeur: Sermap S.A., 25510 Pierrefontaine les Varans (FR)
(72) Inventeur: Millot, Simon, 25000 Besancon (FR)
(74) Mandataire: Ballot, Paul Denis Jacques

(57) **Abrégé**

Engin automoteur (1) notamment destiné à l'élimination de déchets présents à la surface d'un couloir d'exercice (30) d'une étable comportant un bâti (2) sur lequel est agencée une lame racleuse (5) mue par deux roues motrices latérales (13A, 13B) selon une trajectoire prédéterminée, par l'intermédiaire d'un organe suiveur (14), orientable, flexible ou rigide disposé selon un axe médian entre les roues (13A, 13B) et apte à coopérer en glissement avec une rainure (15) réalisée à la surface de l'aire à racler (3) caractérisé en ce qu'il comporte des moyens de changement de direction (16) qui lui sont propres, lui permettant de franchir un aiguillage (17) à au moins deux branches (17A, ) pour être dirigé à la demande vers un couloir d'exercice (30A) ou vers au moins un autre (30B), par orientation de l'ensemble vers la droite (D) ou vers la gauche (G) sans intervention sur les roues (13A, 13B).

## Description

La présente invention concerne un engin automoteur destiné notamment à l'élimination des déchets répandus sur un sol présentant une surface régulière.

L'invention trouve une application particulièrement avantageuse dans le domaine de l'élevage d'animal, pour l'évacuation des fumiers ou des lisiers dans les couloirs d'exercice des étables.

La demanderesse a déjà proposé dans sa demande de brevet français n°96 13846 un engin automoteur comportant des moyens aptes à entraîner en rotation deux roues motrices exerçant son action directement sur la surface à traiter, des moyens de guidage permettant de suivre une trajectoire déterminée dans le couloir d'exercice, ainsi que des moyens de raclage aptes à venir au contact de la surface à traiter afin de désolidariser puis de pousser les déchets lors de l'avance du dispositif de raclage. C'est à dire une distance inférieure au rayon de ladite roue motrice.

Ce dispositif ne permettant en fait que des déplacements rectilignes d'un moyen de guidage dans une rainure ménagée dans le sol, la demanderesse a également proposé dans sa demande de brevet N°98 12971, un engin automoteur du type précité s'en différentiant néanmoins en ce qu'il comporte des moyens de guidage constitué par au moins un organe suiveur orientable ou flexible apte à s'auto positionner dans la rainure qui est susceptible de décrire une courbe selon un certain rayon tel à permettre à l'engin automoteur de se transférer d'un couloir d'exercice vers un autre couloir d'exercice.

Cette seconde solution bien qu'apportant un remède aux inconvénients de la première, présente néanmoins elle-même certains inconvénients.

En effet, devant un aiguillage à au moins deux branches, correspondant à deux couloirs d'exercice différents, il est actuellement nécessaire de stopper l'engin automoteur de raclage de manière à orienter, par l'intermédiaire de moyens de commande, l'organe suiveur se trouvant dans la rainure, vers la droite ou vers la gauche.

Ceci nécessite des moyens complexes et onéreux qu'entend supprimée l'invention.

A cet effet l'invention concerne un engin automoteur, notamment destiné à l'élimination de déchets présents à la surface d'un couloir d'exercice d'une étable, comportant un bâti sur lequel est agencée une lame racleuse, mue par deux roues motrices latérales selon une trajectoire prédéterminée, par l'intermédiaire d'un organe suiveur, orientable, flexible ou rigide, disposé selon un axe médian entre les roues et apte à coopérer en glissement avec une rainure réalisée à la surface de l'aire à racler, caractérisé en ce qu'il comporte des moyens de changement de direction qui lui sont propres, lui permettant de franchir un aiguillage à au moins deux branches, pour être dirigé à la demande vers un couloir d'exercice ou vers au moins un autre, par orientation de l'ensemble, vers la droite ou vers la gauche, sans intervention sur les roues.

De cette manière et selon le but recherché, l'organe suiveur ne comporte plus de moyens de commande particulier et de plus il peut demeurer flexible mais il peut également être rigide.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente en perspective un engin automoteur selon l'invention en cours d'avancement, à proximité d'un aiguillage, les moyens de changement de direction étant en position non active.
La figure 2 représente un engin automoteur selon la figure 1 à l'arrêt devant un aiguillage, les moyens de changement de direction étant en position active.

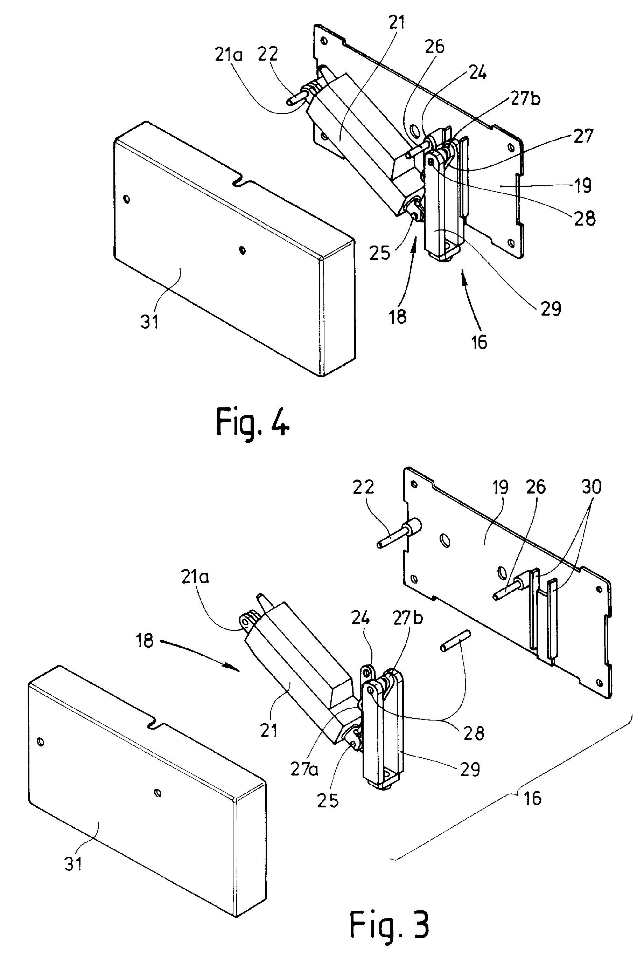

La figure 3 représente une vue synoptique en perspective éclatée des moyens de changement de direction selon les figures 1 et 2.
La figure 4 représente une vue synoptique en perspective éclatée des moyens de changement de direction montée sur une platine avant fermeture du couvercle.

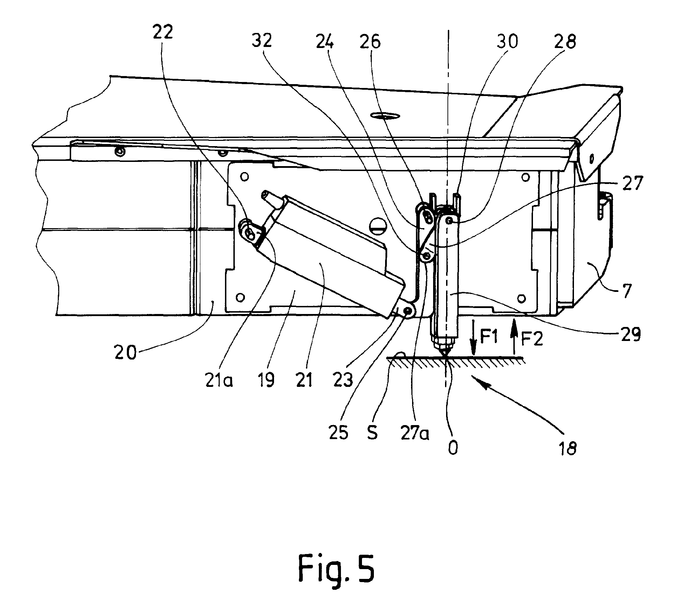

La figure 5 représente une vue en perspective à échelle agrandie des moyens de changement de direction en position active selon la figure 2.

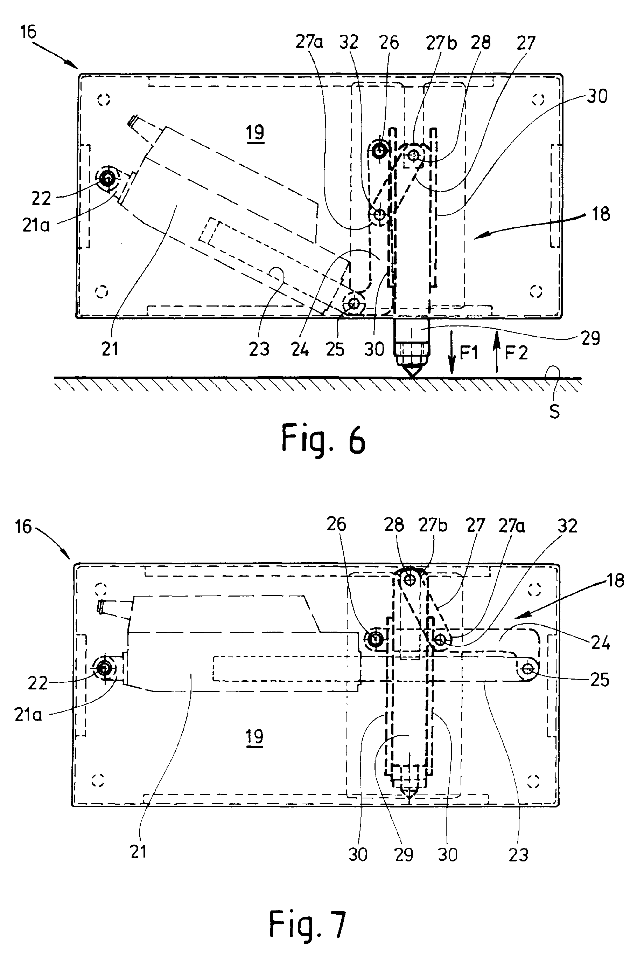

Les figures 6 et 7 représentent respectivement en plan, les moyens de changement de direction selon les figures précédentes respectivement en position active et position non active.

L'engin automoteur 1 désigné globalement sur les figures est constitué par un bâti métallique 2 allongé, apte à se déplacer transversalement à la surface 3 d'un couloir d'exercice 30. Cette structure en forme de poutre comporte une façade 4 rectiligne, destinée à recevoir des moyens de raclage 5, des bords latéraux 6, 7, de faible longueur disposés parallèlement l'un par rapport à l'autre, une face arrière 8 de forme brisée délimitant une partie centrale 9 et des parties latérales 10, 11 symétrique, ainsi qu'un couvercle (non représenté) rigide et basculant, afin de pouvoir respectivement supporter la masse de l'utilisateur ou d'un animal et de permettre toutes interventions sur les composants internes de l'engin 1.

La majorité des éléments mécaniques est regroupée dans la partie centrale 9 du bâti 2. On y retrouve deux roues motrices 13, solidarisé à un même arbre de transmission (non représenté), via un réducteur.

A l'intérieur du bâti se trouve également une batterie rechargeable destinée à l'alimentation du moteur électrique.

Les moyens de raclage 5 sont constitués par une lame formant racle disposée parallèlement à l'axe de rotation des roues 13.

De manière à suivre une trajectoire prédéterminée dans le couloir d'exercice 30, l'engin automoteur 1 comporte un organe suiveur 14 orientable flexible ou même rigide apte à s'auto positionner dans une rainure 15 ménagée à la surface 3 de l'aire de raclage et avec laquelle l'organe suiveur coopère par glissement. Ledit organe suiveur étant solidaire d'une partie centrale longitudinale de l'engin situé sensiblement à équidistance des deux roues 13.

Pour de plus amples détails de description, on se rapportera aux demandes de brevets précités et plus particulièrement à la demande de brevet français N°98 12971 déposée par la demanderesse.

Selon l'invention, l'engin automoteur 1 comporte des moyens de changement de direction 16 qui lui sont propres, lui permettant de franchir un aiguillage 17 à au moins deux branches 17A, 17B pour être dirigé vers un couloir d'exercice 30A ou vers au moins un autre 30B par orientation de l'ensemble vers la droite D ou vers la gauche G, sans intervention sur les roues 13.

Selon l'exemple de réalisation représentée sur les figures, les moyens de changement de direction 16 sont constitués par un dispositif de levage 18 disposé sur l'un des côtés latéraux 11 du bâti 2 et susceptible de prendre appui sur le sol « S » pour y exercer une poussée verticale « F1 » jusqu'à décoller du sol « S » la roue 13B située du même côté 11 du bâti 2 que le dispositif de levage 16, de manière que l'action, dans un sens d'avancement R1 ou dans un sens de recule R2, de l'autre roue 13A, restée sur le sol « S », provoque le changement de direction de l'engin 1 par rotation sur lui-même, vers la droite D ou vers la gauche G, selon le sens de rotation R1 ou R2 de la roue motrice 13A, restée en contact avec le sol « S », ladite rotation de l'engin s'effectuant autour du point d'appui « O » formé par le dispositif de levage 16, selon un rayon « r » égal à la distance entre ce dernier 16 et la roue motrice 13A restée en contact avec le sol « S ».

Toujours selon le présent mode de réalisation, le dispositif de levage 16 de l'un de ses côtés latéraux 11 est constitué par :
- une platine 19 rapportée sur l'un des flans verticaux 20 du bâti 2 sur laquelle est disposé un vérin 21 monté rotatif par l'une des extrémités 21a de son carter autour d'un point fixe d'articulation 22 et comportant à son autre extrémité constituée par le piston mobile 23,
- une bielle 24, articulée librement sur une articulation 25 sur ce dernier 23, pour être entraînée angulairement par celui-ci dans un sens ou dans l'autre autour d'un point d'articulation 26 fixe par rapport auquel est susceptible de se débattre ladite bielle 24,
- une biellette 27 s'articulant librement sur une articulation 32 par l'une de ses extrémités 27a sur une partie intermédiaire de la bielle 24 et à l'autre extrémité 27b de laquelle biellette 27 s'articule sur une articulation 28, également librement, par l'une de ses extrémités 29a,
- une béquille 29 susceptible d'être activée en montée ou en descente F1, F2 par les débattements angulaires de la bielle 24 et de la biellette 27 et dont l'autre extrémité 29b constitue le point d'appui « O » sur le sol « S »,
- une glissière de guidage verticale fixe 30 dans laquelle est susceptible de coulisser ladite béquille 29 sous l'action desdites bielles 24 et biellettes 27.

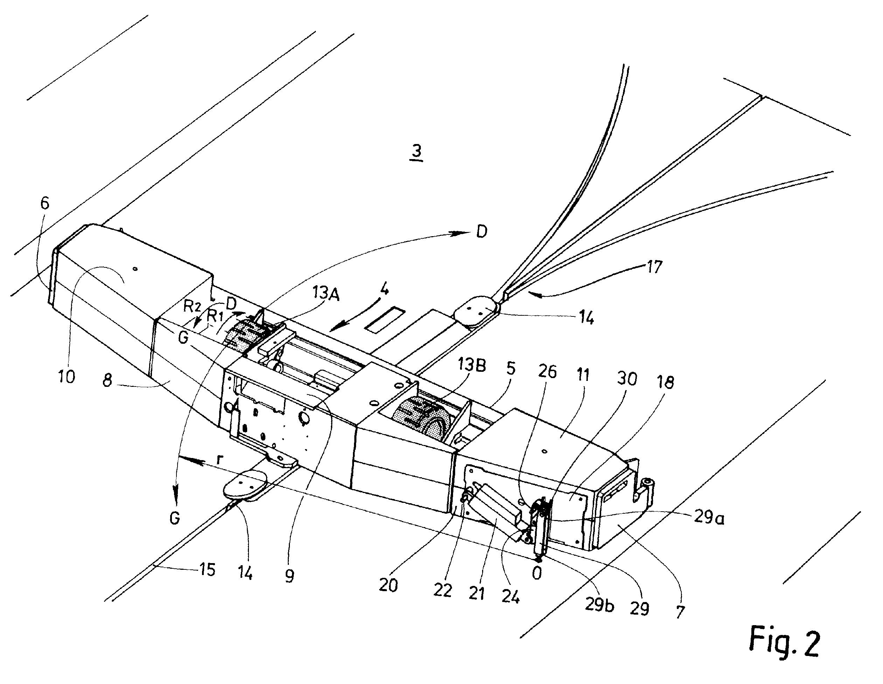

En fait, l'orientation de l'engin 1 vers la droite ou vers la gauche selon qu'il doive prendre le couloir 30B ou 30A, s'effectue selon le processus suivant :
- L'engin 1 s'arrête en position d'aiguillage (figure 2)
- La béquille 29 descend selon F1 et soulève l'engin jusqu'à décollement de la roue 13B située du côté de la béquille 29
- La roue 13A est mue selon le sens de rotation F1 ou F2 correspondant respectivement à une rotation autour du point O, vers la droite ou vers la gauche
- L'organe suiveur 14 pivote vers la droite ou vers la gauche de l'aiguillage selon le sens choisit
- La béquille 27 est relevée suivant F2 et le poids de l'engin revient sur les deux roues 13A, 13B
- L'engin repart dans la direction choisi, c'est à dire vers le couloir d'exercice 30A en ayant tourné à gauche ou 30B en ayant tourné à droite

Selon une variante de réalisation (non représentée) les moyens de changement de direction 16 sont constitués par deux dispositifs de levage 18 disposés sur l'un et l'autre des côtés latéraux 10 et 11 du bâti 2, susceptible de prendre appui sur le sol « S » pour y exercer une poussée verticale « F1 » jusqu'à décoller du sol l'une ou l'autre des roues motrices 13A, 13B, de manière que l'action dans un sens d'avancement de l'autre roue, restée au sol, provoque le changement de direction de l'engin, par rotation sur lui-même, vers la droite ou vers la gauche, autour du point d'appui formé par l'un ou l'autre des dispositifs de levage, selon un rayon égal à la distance de ce dernier et la roue demeurée en contact avec le sol.

Dans un mode de réalisation ou dans l'autre, un couvercle 31 vient protéger les moyens de changement de direction 16 d'une manière générale.

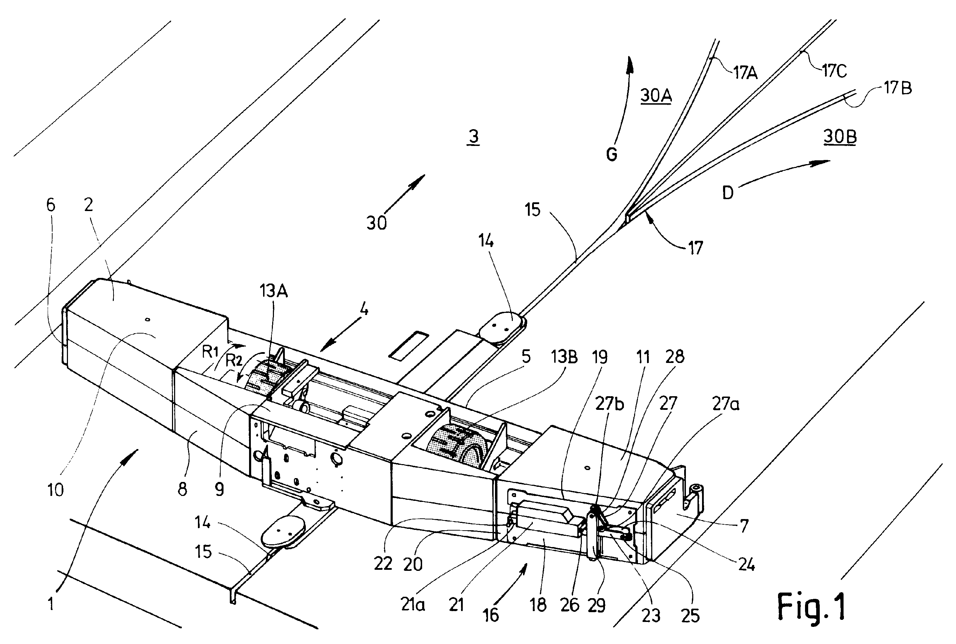

Bien entendu, l'aiguillage 17 constitué par les branches 17A, 17B pourrait également comporter une branche rectiligne 17 C comme représentée à la figure 1 mais également d'autres branches incurvées correspondant à autant de couloir d'exercice.

## Revendications

1. Engin automoteur (1) notamment destiné à l'élimination de déchets présents à la surface d'un couloir d'exercice (30) d'une étable comportant un bâti (2) sur lequel est agencée une lame racleuse (5) mue par deux roues motrices latérales (13A, 13B) selon une trajectoire prédéterminée, par l'intermédiaire d'une part d'un organe suiveur (14), orientable, flexible ou rigide disposé selon un axe médian entre les roues (13A, 13B) et apte à coopérer en glissement avec une rainure (15) réalisée à la surface de l'aire à racler (3) et d'autre part de moyens de changement de direction (16) qui lui sont propres, lui permettant de franchir un aiguillage (17) à au moins deux branches (17A, 17B) pour être dirigé à la demande vers un couloir d'exercice (30A) ou vers au moins un autre (30B), par orientation de l'ensemble vers la droite (D) ou vers la gauche (G), **caractérisé en ce que** les moyens de changement de direction (16) sont constitués par au moins un dispositif de levage (18) disposés sur l'un et/ou l'autre des côtés latéraux (10 et 11) du bâti (2) et susceptible de prendre appui sur le sol « S » pour y exercer une poussée verticale « F1 » jusqu'à décoller du sol l'une ou l'autre des roues motrices (13A, 13B), de manière que l'action de l'autre roue, restée au sol, provoque le changement de direction de l'engin, par rotation sur lui-même, vers la droite ou vers la gauche, autour du point d'appui formé par l'un ou l'autre des dispositifs de levage, selon un rayon égal à la distance entre ce dernier et la roue demeurée en contact avec le sol.

2. Engin automoteur selon la revendication 1, **caractérisé en ce que** les moyens de changement de direction (16) sont constitués par deux dispositifs de levage (18) disposés sur l'un et l'autre des côtés latéraux (10 et 11) du bâti (2), susceptible de prendre appui sur le sol « S » pour y exercer une poussée verticale « F1 » jusqu'à décoller du sol l'une ou l'autre des roues motrices (13A, 13B), de manière que l'action dans un sens d'avancement de l'autre roue, restée au sol, provoque le changement de direction de l'engin, par rotation sur lui-même, vers la droite ou vers la gauche, autour du point d'appui formé par l'un ou l'autre des dispositifs de levage, selon un rayon égal à la distance entre ce dernier et la roue demeurée en contact avec le sol.

3. Engin automoteur selon la revendication 1, **caractérisé en ce que** les changements de direction (16) sont constitués par un seul dispositif de levage (18) disposé sur l'un des côtés latéraux (11) du bâti (2) et susceptible de prendre appui sur le sol « S » pour y exercer une poussée verticale « F1 » jusqu'à décoller du sol « S » la roue (13B) située du même côté (11) du bâti (2) que le dispositif de levage (16), de manière que l'action, dans un sens d'avancement (R1) ou dans un sens de recule (R2), de l'autre roue (13A), restée sur le sol « S », provoque le changement de direction de l'engin (1) par rotation sur lui-même, vers la droite (D) ou vers la gauche (G), selon le sens de rotation (R1 ou R2) de la roue motrice (13A), restée en contact avec le sol « S », ladite rotation de l'engin s'effectuant autour du point d'appui « O » formé par le dispositif de levage (16), selon un rayon « r » égal à la distance entre ce dernier (16) et la roue motrice (13A) restée en contact avec le sol « S ».

4. Engin automoteur selon l'une des revendications 2 ou 3, **caractérisé en ce que** le dispositif de levage (16) de l'un de ses côtés latéraux (11) est constitué par :
- une platine (19) rapportée sur l'un des flans verticaux (20) du bâti (2) sur laquelle est disposé un vérin (21) monté rotatif par l'une des extrémités (21a) de son carter autour d'un point fixe d'articulation (22) et comportant à son autre extrémité constituée par le piston mobile (23),
- une bielle (24), articulée librement sur une articulation (25) sur ce dernier (23), pour être entraînée angulairement par celui-ci dans un sens ou dans l'autre autour d'un point d'articulation (26) fixe par rapport auquel est susceptible de se débattre ladite bielle (24),
- une biellette (27) s'articulant librement sur une articulation (32) par l'une de ses extrémités (27a) sur une partie intermédiaire de la bielle (24) et à l'autre extrémité (27b) de laquelle biellette (27) s'articule sur une articulation (28), également librement, par l'une de ses extrémités (29a),
- une béquille (29) susceptible d'être activée en montée ou en descente (F1, F2) par les débattements angulaires de la bielle (24) et de la biellette (27) et dont l'autre extrémité (29b) constitue le point d'appui « O » sur le sol « S »,
- une glissière de guidage verticale fixe (30) dans laquelle est susceptible de coulisser ladite béquille (29) sous l'action desdites bielles (24) et biellettes (27).
